# EUROPEAN PATENT SPECIFICATION

(11) **EP 1 902 061 B1**
(45) Date of publication and mention of the grant of the patent: **30.12.2009**
(21) Application number: 06785890.2
(22) Date of filing: 28.06.2006
(51) Int. Cl.: C07F 15/00

(54) **PROCESS FOR MAKING DIPHOSPHINE-RUTHENIUM-DIAMINE COMPLEXES**
VERFAHREN ZUR HERSTELLUNG VON DIPHOSPHIN-RUTHENIUM-DIAMIN-KOMPLEXEN
PROCÉDÉ SERVANT À FABRIQUER DES COMPLEXES DIPHOSPHINE-RUTHÉNIUM-DIAMINE

(30) Priority: 01.07.2005 US 696273 P
(43) Date of publication of application: 26.03.2008
(73) Proprietor: Dr. Reddy's Laboratories (EU) Limited, Beverley East Yorkshire HU17 0LD (GB)
(72) Inventor: MORAN, Paul, H., Cambridge XX CB4 6YZ (GB)
(74) Representative: Raynor, John
(86) International application number: PCT/US2006/025450
(87) International publication number: WO 2007/005550

(56) References cited:
- US-B1- 6 720 439
- DOUCET, HENRI ET AL: "Trans-[RuCl2(phosphine)2(1,2-diamine)] and chiral trans- [RuCl2(diphosphine)(1,2-diamine)]: shelf-stable precatalysts for the rapid, productive, and stereoselective hydrogenation of ketones" ANGEWANDTE CHEMIE, INTERNATIONAL EDITION ( 1998 ), 37(12), 1703-1707 CODEN: ACIEF5; ISSN: 1433-7851, 1998, XP002403795 cited in the application

## Description

### BACKGROUND OF THE INVENTION

The instant invention is in the field of processes for making diphosphine-ruthenium-diamine complexes. Diphosphine-ruthenium-diamine complexes are useful, for example, as catalysts for the asymmetric hydrogenation of ketones, USP 5,763,688, and imines, USP 6,528,687. In the prior art, diphosphine-ruthenium-diamine complexes are made by reacting a diphosphine compound with an arene ruthenium chloride compound in *N*,*N*-dimethylformamide, followed by reaction of the resultant oligomeric species with a diamine to produce the diphosphine-ruthenium-diamine complex, Noyori et al., Angewandte Chemie, International Ed., 2001, 40, 40-73. However, such prior art processes for making diphosphine-ruthenium-diamine complexes require heating to above 100°C and typically have yields of from about 50% to about 70% based on diphosphine, with the production of numerous by-products, Noyori, et al., Angewandte Chemie, International Ed., 1998, 37, 1706. Despite the significant usefulness of diphosphine-ruthenium-diamine complexes there remains a need for processes for making diphosphine-ruthenium-diamine complexes with improved yield.

### SUMMARY OF THE INVENTION

An important benefit of the process of the instant invention is the improved yield obtained thereby, through use of milder reaction conditions than the prior art process. It has been discovered that when a specific set of solvents are used diphosphine-ruthenium-diamine complexes can be produced with improved yield based on the diphosphine. More specifically, the instant invention is a process for making diphosphine-ruthenium-diamine complexes, comprising the steps of:
(a) contacting a phosphine compound of formula I with an arene ruthenium compound in a first solvent to produce an intermediate mixture comprising a diphosphine-ruthenium compound of formula III, the first solvent consisting essentially of a mixture of an aprotic solvent and a protic solvent; 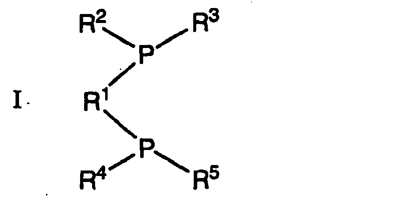 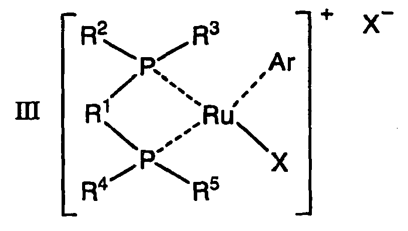
(b) removing the first solvent from the intermediate mixture to produce an intermediate solid comprising the diphosphine-ruthenium compound of formula III;
(c) contacting the intermediate solid comprising the diphosphine-ruthenium compound of formula III with a diamine of formula IV and a second solvent to produce a diphosphine-ruthenium-diamine complex of formula V, the second solvent consisting essentially of an aprotic solvent selected from the group consisting of ethers and hydrocarbon solvents, 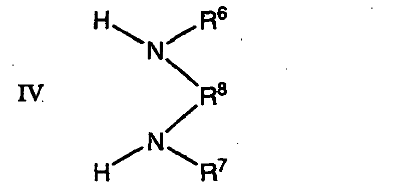 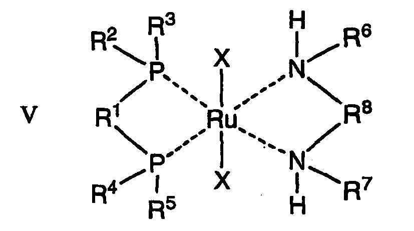 where R¹, R², R³, R⁴, R⁵, R⁶, R⁷ and R⁸ are each independently an alkyl, aryl or alkaryl group comprised of carbon, hydrogen and optionally heteroatom(s), where Ar is an aryl group comprised of carbon, hydrogen and optionally heteroatom(s) and where X is a halide or carboxylate, or any of R¹, R², R³, R⁴ and R⁵ are be linked to form cyclic chiral phosphines, or R¹ can incorporate a metallocene. Preferably, R¹, R², R³, R⁴, R⁵, R⁶, R⁷ and R⁸ comprise up to 20 carbon atoms. More preferably R¹, R², R³, R⁴, R⁵, R⁶, and R⁷ comprise up to 1, 2, 3, 4, 5, 6, 7, 8, 9, 10, 11 or 12 carbon atoms. Preferably R⁶ and/or R⁷ are hydrogen.

### DETAILED DESCRIPTION

The instant invention is a process for making diphosphine-ruthenium-diamine complexes having the formula V, 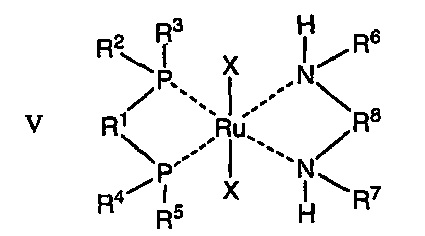 where R¹, R², R³, R⁴, R⁵, R⁶, R⁷ and R⁸ are each independently an alkyl, aryl or alkaryl group comprised of carbon, hydrogen and optionally heteroatom(s), where Ar is an aryl group comprised of carbon, hydrogen and optionally heteroatom(s) and where X is a halide or carboxylate, wherein any of R¹, R², R³, R⁴ and R⁵ can linked to form cyclic chiral phosphines, wherein R¹ can incorporate a metallocene and wherein R⁶ and/or R⁷ can be hydrogen. The compound of the following formula VI is an example of a system where R² is linked to R³ and where R⁴ is linked to R⁵. The compound of the following formula VII is an example of a system where R¹ incorporates a metallocene. The compound of the following formula VIII is an example of a system where R⁶ and R⁷ are hydrogen.

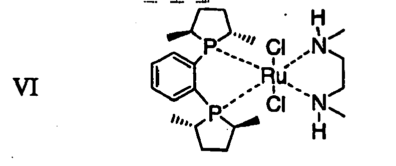

### [(S,S)-Me-DuPhos RuCl₂ N,N'-DMEDA]

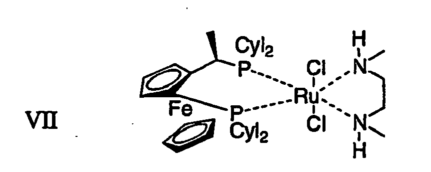

### [(R)-(S)-Cyl₂-Josiphos RuCl₂ N,N'-DMEDA]

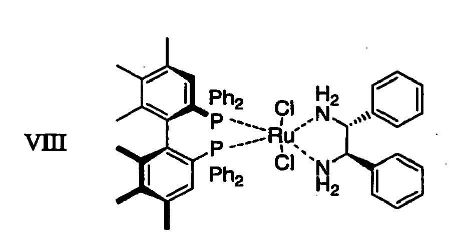

### [(R)-HexaPHEMP RuCl₂ (R,R)-DPEN)

The phosphine moiety in the complex is preferably a bis-tertiary phosphine in which the two phosphorus atoms are linked by a C₂₋₇ carbon chain such that they form a 5-10 membered ring with the Ru atom. Any diamine can be used in the instant invention such as 1,2-diphenylethylene diamine (DPEN), *trans*-1,2-diaminocyclohexane (DACH) or even an amine substituted pyridine, for example α-picolylamine, see Ohkuma et al., J. Am. Chem. Soc., 2005, 127, 8288-8289. The diamine moiety in the complex is preferably a vicinal diamine with any aromatic, alkaryl, alkyl, heteroatom or hydrogen substituent on the carbon backbone linking the nitrogen atoms. X is preferably chloride.

The instant invention, comprises three steps. The first step is to contact a phosphine compound of formula I with an arene ruthenium compound in a first solvent to produce an intermediate mixture comprising a diphosphine-ruthenium compound of formula III, the first solvent consisting essentially of a mixture of an aprotic solvent and a protic solvent. This step is preferably conducted at a temperature in the range of 0-70 degrees Celsius, more preferably in the range of 40-60 degrees Celsius and most preferably at about 55 degrees Celsius. 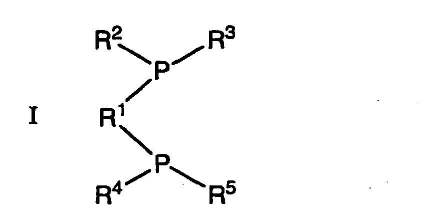 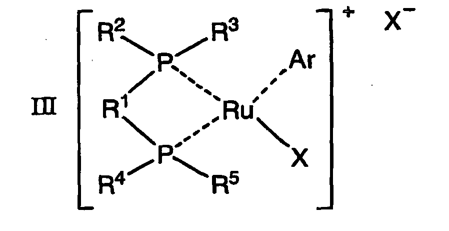 The second step is to remove the first solvent from the intermediate mixture to produce an intermediate solid comprising the diphosphine-ruthenium compound of formula III. The solvent is preferably removed by the application of a vacuum to vaporize the first solvent.

The third step is to contact the intermediate solid comprising the diphosphine-ruthenium compound of formula III with a diamine of formula IV and a second solvent to produce a diphosphine-ruthenium-diamine complex of formula V, the second solvent consisting essentially of an aprotic solvent selected from the group consisting of ethers and hydrocarbon solvents, 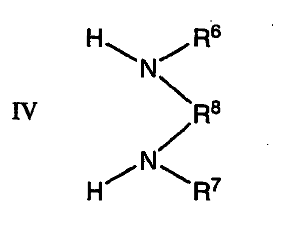 where, again, R¹, R², R³, R⁴, R⁵, R⁶, R⁷ and R⁸ are each independently an alkyl, aryl or alkaryl group comprised of carbon, hydrogen and optionally a heteroatom(s), where Ar1 is an aryl group comprised of carbon, hydrogen and optionally a heteroatom(s) and where X is a halide or carboxylate, wherein any of R¹, R², R³, R⁴ and R⁵ can linked to form cyclic chiral phosphines, wherein R¹ can incorporate a metallocene and wherein R⁶ and/or R⁷ can be hydrogen. This step is preferably conducted at a temperature in the range of 30-80 degrees Celsius, more preferably in the range of 50-70 degrees Celsius and most preferably at about 60 degrees Celsius. The compound of formula V is preferably isolated by partially removing the second solvent by vacuum assisted vaporization followed by the addition of an alcohol to crystallize the compound of formula V. The purity of the crystallized compound of formula V is preferably determined by NMR Spectroscopy.

Preferably, in the first solvent mixture the aprotic solvent consists essentially of an ether and/or a chlorinated solvent and wherein the protic solvent of the first solvent mixture consists essentially of an alcohol. More preferably, the aprotic solvent of the first solvent mixture is selected from the group consisting of diethyl ether, tetrahydrofuran, dimethyl ether, methyl-tetrahydrofuran, diisopropyl ether, methyl tert-butyl ether, di-n-butyl ether, dichloromethane and mixtures thereof and the protic solvent of the first solvent mixture is selected from the group consisting of methanol, ethanol, isopropanol, butanol and mixtures thereof. Preferably, the second solvent is selected from the group consisting of tetrahydrofuran, diethyl ether, methyl-tetrahydrofuran, diisopropyl ether, methyl tert-butyl ether, di-n-butyl ether, bis(2-methoxyethyl) ether 1,4-dioxane and mixtures thereof. The second solvent should not contain chlorinated solvents, alcohols or nitrile solvents.

In the full scope of the instant invention the arene ruthenium compound can be any monomeric or oligomeric Ru(II) complex in which each ruthenium atom is pi-bonded to a carbocyclic or heterocyclic arene. Preferably, the arene ruthenium compound is one in which the arene is a benzene, optionally forming part of a fused carbocyclic or heterocyclic ring system, and optionally bearing one or more substituents selected from the group comprising alkyl, alkenyl, alkynyl, aryl, halogen, alkoxy, acyloxy, silyloxy, aryl, amino, amido, carboxylic acid or ester, keto, or sulphonamide. A highly preferred arene is benzene or p-cymene. More preferably, the arene ruthenium compound is a dimeric complex of formula II.

### II [ArRUX₂]₂

Most preferably, the ruthenium compound is [(p-cymene)RuCl_{2]2}, which has the advantage of good storage stability.

### EXAMPLES

The following examples illustrate the present invention. The complexes prepared in these examples are depicted at the end of this section. All reaction yields are based on diphosphine.

### Example 1: Synthesis of Dichloro[(R)-4,4',5,5',6,6'-hexamethyl-2,2'-bis[diphenylphosphino]-biphenyl][(1R,2R)-1,2-diphenylethylenediamine]ruthenium (II): [(R)-HexaPHEMP RuCl₂(R,R)-DPEN]

A 500m Schlenk flask, with stirrer is charged under nitrogen with 30.2g (49.82mmol)) of the ligand (*R*)-HexaPHEMP and 15.87g of [(*p*-cymene)RuCl₂]₂ (25.9mmol). 300ml of dry and degassed methanol and 40m of dry and gassed dichloromethane are added. The vessel is heated to 50°C for 30 minutes before ³¹P-NMR (CDCl₃) reveals that the reaction has gone ' to completion as indicated by two sets of doublets at 40.2 ppm and 27.5ppm. The solvents are removed *in vacuo* to give a yellow crystalline solid. 11.63g of (*R,R*)-DPEN (54.80 mmol, 1.1eq) are added with 250m of dry degassed tetrahydrofuran under nitrogen. The vessel is heated to 65°C for 8 hours before ³¹P-NMR of the crude reaction mixture reveals that the reaction has produced ∼92% product with minor by-products. The solvent is removed *in vacuo* to give a dry brown solid, which is treated 150ml of dry degassed methanol at 60°C for 30 minutes. Addition of the methanol causes, almost instantaneously, a deep yellow crystalline solid to be deposited. After cooling to room temperature the material is collected under vacuum and washed with 4 x 20ml of dry degassed methanol under nitrogen. The solid is dried to yield 39.2g (80% recovered yield) of the title compound in greater than 99% purity. ³¹P-NMR analysis of the mother liquors reveals unrecovered product and small amounts of by products.

³¹P NMR (162 MHz, CDCl₃) δ45.6 ppm, singlet.

### Example 2: Comparative synthesis of Dichloro[(R)-4,4',5,5',6,6'-hexamethyl-2,2'-bis[diphenylphosphino]-biphenyl][(1R,2R)-1,2-diphenylethylenediamine]ruthenium (II): [(R)-HexaPHEMP RuCl₂ (R,R)-DPEN].

A 500ml flask under nitrogen is charged with 6.07g of (*R*)-HexaPHEMr (10 mmol), 100ml dry degassed dimethylformamide and 100ml dry degassed toluene. 3.06g of [(*p-*cymene)RuCl₂]₂ (5 mmol) is added to the mixture and heated to 110°C for 5 hours. 2.12g of (*R,R*)-DPEN (10 mmol) in 100ml of dry degassed toluene are added to the reaction and heated at 110°C for 17 hours. The reaction mixture is cooled to room temperature (RT) before removing the dimethylformamide *in vacuo.* The residual dimethylformamide is removed as an azeotrope with cyclohexanone before drying to give brown oil. The brown oil is dissolved in isopropanol, after which a yellow solid is deposited and isolated by filtration and washed with 2 x 20ml of isopropanol to give colourless washings. The solid is dried under vacuum to give the title compound in 65% yield.

³¹P NMR (162 MHz, CDCl₃) δ45.6 ppm, singlet.

### Example 3: Synthesis of Dichloro[(R)-2,2'-bis[di(3,5-xylyyl)phosphino]1-1,1'-binaphthyl][(2R)-1,1-bis(4-methoxyphenyl)-3-3-methyl-1,2-butanediamine]ruthenium (II): [(R)-Xyl-BINAP RuCl₂ (R)-DAIPEN]

A Schlenk flask under nitrogen is charged with 50mg of (*R*)-Xyl-BINAP (0.068 mmol) and 20.8mg of [(*p*-cymene)RuCl₂]₂ (0.034 mmol) and charged with 5ml of dry degassed ethanol and 0.625ml of dry degassed dichloromethane. The solution is heated to 50°C for 30 minutes before removing the solvent *in vacuo* to give a yellow crystalline solid. 21.1mg of (*R*)-DAIPEN (0.068 mmol) are added with 5ml of dry degassed tetrahydrofuran and heated at 60°C for 8 hours. The reaction is cooled to room temperature. ³¹P NMR reveals only a single species and no starting materials. ³¹P NMR reveals >99% product and conversion. The solvent is removed *in vacuo* to give a pale yellow solid.

³¹P NMR (162 MHz, CDCl₃) δ46.9 ppm, doublet J*_{P-P}* 36.9 Hz and 44.5ppm, doublet J*_{P-P}* 36.9 Hz.

### Example 4: Synthesis of Dichloro[(S)-2,2'-bis[di(3,5-xylyl)phosphinol-1,1'-binaphthyl][(1S,2S)-1,2-diphenylethylenediamine]ruthenium (II): [(S)-Xyl-BINAP RuCl₂ (S,S)-DPEN]

A Schlenk flask under nitrogen is charged with 50mg of (*S*)-Xyl-BINAP (0.068 mmol) and 20.8mg of [(*p*-cymene)RuCl₂]₂ (0.034 mmol) and charged with 5ml of dry degassed ethanol and 0.625ml of dry degassed dichloromethane. The solution is heated to 50°C for 30 minutes before removing the solvent *in vacuo* to give a yellow crystalline solid. 14.4mg of (*S*,*S*)-DPEN (0.068 mmol) are added with 5ml of dry degassed tetrahydrofuran and heated at 60°C for 8 hours. The reaction is cooled to room temperature. ³¹P NMR reveals only a single species and no starting materials. ³¹P NMR reveals >99% product and conversion. The solvent is removed *in vacuo* to give a pale yellow solid.

³¹P NMR (162 MHz, CDCl₃) δ45.3 ppm, singlet.

### Example 5: Synthesis of Dichloro[(R)-2,2',6,6'-Tetramethoxy-4,4'-bis(di(3,5-xylyl)phosphino)-3,3'-bipyridine][(1R,2R)-1,2-diphenylethylenediamine]ruthenium (II): [(R)-Xyl-P-Phos RuCl₂, (R,R)-DPEN]

A Schlenk flask under nitrogen is charged with 100mg of (*R*)-Xyl-P-Phos (0.1321 mmol) and 40.5mg of [(*p*-cymene)RuCl₂]₂ (0.06606 mmol) and charged with 10ml of dry degassed ethanol and 1.25m of dry degassed dichloromethane. The solution is heated to 50°C for 30 minutes before removing the solvent *in vacuo* to give a yellow crystalline solid. 28.6mg of (*R,R*)-DPEN (0.1321 mmol) are added with 10ml of dry degassed tetrahydrofuran and heated at 60°C for 8 hours. The reaction is cooled to room temperature. ³¹P NMR reveals only a single species and no starting materials. ³¹P NMR reveals >99% product and conversion. The solvent is removed *in vacuo* to give a pale yellow solid.

³¹P NMR (162 MHz, CDCl₃) δ43.8 ppm, singlet.

### Example 6: Synthesis of Dichloro[(S)-(2,3,2',3'-tetrahydro-5,5'-bi(1,4-benzodioxin)-6,6'-diyl)bis-(diphenylphosphane)][(1S,2S)-1,2-diphenylethylenediamine]ruthenium (II): [(S)-SYNPHOS RuCl₂ (S,S)-DPEN]

A Schlenk flask under nitrogen is charged with 50mg of (*S*)-SYNPHOS (0.0783 mmol) and 23.9mg.of [(*p*-cymene)RuCl₂]₂ (0.0392 mmol) and charged with 5ml of dry degassed ethanol and 0.625ml of dry degassed dichloromethane. The solution is heated to 50°C for 30 minutes before removing the solvent *in vacuo* to give a yellow crystalline solid. 16.6mg of (*S*,*S*)-DPEN (0.068 mmol) are added with 5ml of dry degassed tetrahydrofuran and heated at 60°C for 8 hours. The reaction is cooled to room temperature. ³¹P NMR reveals only a single species and no starting materials. ³¹P NMR reveals >99% product and conversion. The solvent is removed *in vacuo* to give a pale yellow amorphous solid.

³¹P NMR (162 MHz, CDCl₃) δ47.2 ppm, singlet.

### Example 7: Synthesis of Dichloro[(R)-(6,6'-O-(1,4-butylene)-oxylbiphenyl-2,2'-diyl)bis(diphenyl)phosphine][(1R,2R)-1,2-diphenylethylenediamine]ruthenium (II): [(R)-C₄-TunePHOS RuCl₂ (R,R)-DPEN]

A Schlenk flask under nitrogen charged with 50m of (*R*)-C₄-TunePHOS (0.0822 mmol) and 25.1mg of [(*p*-cymene)RuCl₂]₂ (0.0411 mmol) and charged with 5ml of dry degassed ethanol and 0.625ml of dry degassed dichloromethane. The solution is heated to 50°C for 30 minutes before removing the solvent *in vacuo* to give a yellow crystalline solid. 17.4mg of (*R*,*R*)-DPEN (0.068 mmol) are added with 5ml of dry degassed tetrahydrofuran and heated at 60°C for 8 hours. The reaction is cooled to room temperature. ³¹P NMR reveals ∼80% product and 20% of a by-product. The solvent is removed *in vacuo* and the residue treated with isopropanol to give a pale yellow amorphous solid which is isolated by filtration to give the title compound.

³¹P NMR (162 MHz, CDCl₃) δ47.95 ppm, singlet.

### Example 8: Synthesis of [(S)-2,2'-bis[diphenyl]phosphino]-1,1'-binaphthyl][(1R,2R)-1,2-diaminocyclohexane]ruthenium (II): [(S)-BINAP RuCl₂ (R,R)-DACH]

A Schlenk flask under nitrogen is charged with 101.7 mg of (*S*)-BINAP (0.1633 mmol) and 50 mg of [(*p*-cymene)RuCl₂]₂ (0.0816 mmol) and charged with 5ml of dry degassed dichloromethane and 0.625ml of dry degassed methanol. The solution is heated to 50°C for 20 minutes before removing the solvent *in vacuo* to give a yellow crystalline solid. 18.65mg of (*R*,*R*)-DACH (0.1633 mmol) are added with 5ml of dry degassed tetrahydrofuran and heated at 60°C for 4 hours. The reaction is cooled to room temperature. ³¹P NMR reveals essentially a single species and no starting materials. ³¹P NMR reveals >95% product and conversion. The solvent is removed *in vacuo* to give a pale yellow amorphous solid.

³¹P NMR (162 MHz, CDCl₃) δ46.42 ppm, singlet.

### Example 9: Synthesis of [(S)-2,2'-bis[di(4-methylphenyl)phosphino]-1,1'-binaphthyl][(1R,2R)-1,2-diaminocyclohexane]ruthenium (II): [(S)-Tol-BINAP RuCl₂ (R,R)-DACH]

A Schlenk flask under nitrogen is charged with 110.8 mg of (*S*)-BINAP (0.1633 mmol) and 40.8 mg of [(benzene)RuCl₂]₂ (0.0816 mmol) and charged with 5ml of dry degassed dichloromethane and 0.625ml of dry degassed methanol. The solution is heated to 50°C for 15 minutes before removing the solvent *in vacuo* to give a yellow crystalline solid. 18.65mg of (*R*,*R*)-DACH (0.1633 mmol) are added with 5ml of dry degassed tetrahydrofuran and heated at 60°C for 4 hours. The reaction is cooled to room temperature. ³¹P NMR reveals essentially a single species and no starting materials. ³¹P NMR reveals >96% product and conversion. The solvent is removed *in vacuo* to give a pale yellow amorphous solid.

³¹P NMR (162 MHz, CDCl₃) δ44.79 ppm, singlet.

### Example 10: General procedure and application to the preparation to additional diphosphine-ruthenium-diamine complexes

A Schlenk flask under nitrogen is charged with 0.1631 mmol of phosphine ligand and 50.0mg of [(*p*-cymene)RuCl₂)₂ (0.0816 mmol) and charged with a first solvent consisting of 5ml of dry degassed ethanol and 0.625ml of dry dichloromethane The solution is heated to 50°C for 15 minutes before removing the solvent *in vacuo* to give yellow crystalline solids. 14.4mg of *N*,*N*-DMEDA (0.1631 mmol) are added with 5ml of dry degassed tetrahydrofuran (second solvent) and heated at 60°C. The reaction is cooled to room temperature and analysed by ³¹P NMR The solvents are removed *in vacuo* and the residue treated with isopropanol to give a pale yellow - yellow/brown solids, which are isolated by filtration. This method is used to prepare the following complexes:
Dichloro[*rac*-bis(di(3,5-xylyl)phosphino]-1,1'-binaphthyl][1,2-*N,N*'-dimethylethylenediamine]ruthenium (II]:
   [*rac*-Xy]-BINAP RuCl₂ *N*,*N*'-DMEDA]
Dichloro[*rac*-6,6'-difluoro-2,2'-bis[diphenylphosphino]-biphenyl][1,2-*N*,*N*'-dimethylethylenediamine]ruthenium (II): [*rac*-F-BIPHEP RuCl₂ *N*,*N*'-DMEDA]
Dichloro[1,2-Bis-((2*S*,5*S*)-2,5-dimethylphospholano)benzene][1,2-*N*,*N*'-dimethylethylenediamine]ruthenium (II): [(*S*,*S*)-Me-DuPhos RuCl₂ *N*,*N*'-DMEDA]
Dichloro[(*R*)-(-)-1-[(*S*)-2-(dicyclohexylphosphino)ferrocenyl]ethyldicydohexylphosphine][1,2-*N,N*'-dimethylethylenediamine]ruthenium (II): [(*R*)-(*S*)-(Cyl)₂-Josiphos RuCl₂ *N*,*N*'-DMEDA]

The following table shows reaction times, conversion and NMR characterisation data for each of the complexes:

| **Phosphine** | **Diamine** | **Reaction time Stage 1** | **Stage 1 ³¹P-NMR Data** | **Reaction time Stage 2** | **³¹P-NMR Conversion** | **Stage 2 ³¹P. NMR Data CDCl₃** |
|---|---|---|---|---|---|---|
| *rac*-Xyl-BINAP | *N,N'-*DMEDA | 20 minutes | 39.5ppm, doublet, | 120 minutes | >99% | 41.54ppm |
| | | | 62.2Hz; 27.8ppm doublet, 62.2Hz | | | singlet |
| *rac*-F-BIPHEP | *N,N'-*DMEDA | 20 minutes | 41.3ppm, doublet, | 5 hours | >99% | 40.55ppm |
| | | | 65.3Hz; 27.9ppm doublet, 65.3Hz | | | singlet |
| (*S*,*S*)-MeDuPhos | *N,N'-*DMEDA | 20 minutes | 97.4ppm, doublet, | 48 hours | >90% | 88.9ppm |
| | | | 36.1Hz; 83.9ppm doublet, 36.1Hz | | | singlet |
| (*R*)-(*S*)-(Cyl)₂- | *N,N'-*DMEDA | 20 minutes | 55.9ppm, doublet, | 5 hours | >95% | 58.6ppm, |
| Josiphos | | | 30.2ppm doublet, | | | doublet, 37.6Hz; 41.6ppm, |
| | | | | | | doublet, 37.6Hz. |

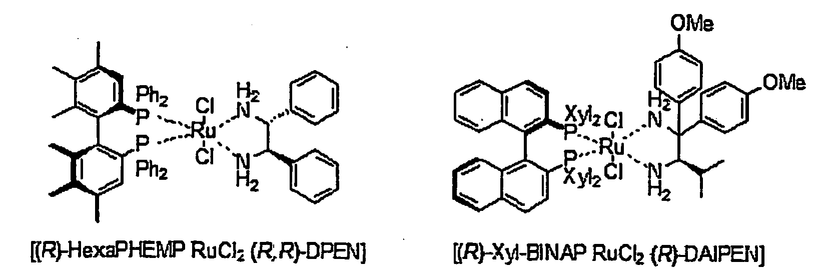

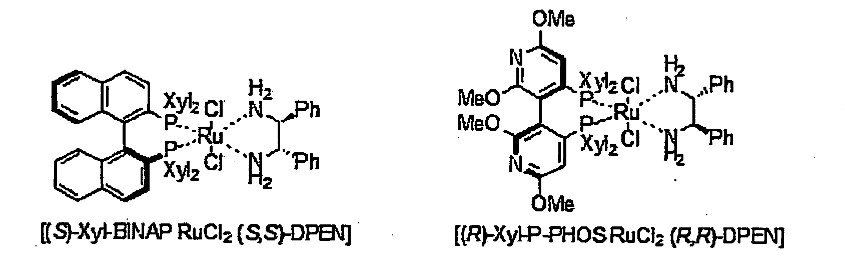

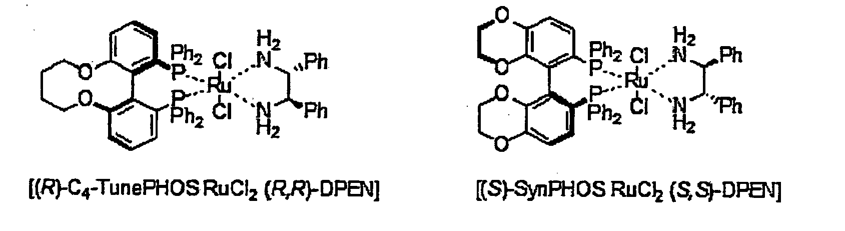

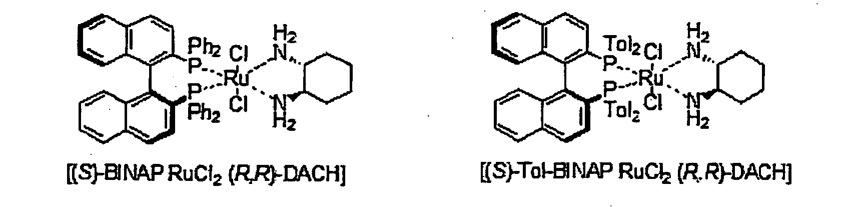

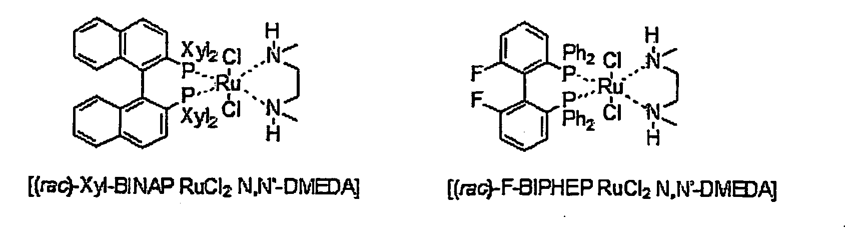

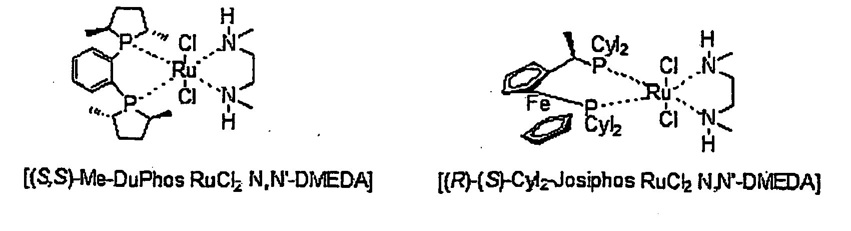

## Claims

1. A process for making diphosphine-ruthenium-diamine complexes, comprising the steps of:
(a) contacting a phosphine compound of formula I with an arene ruthenium compound in a first solvent to produce an intermediate mixture comprising a diphosphine-ruthenium compound of formula III, the first solvent consisting essentially of a mixture of an aprotic solvent and a protic solvent; 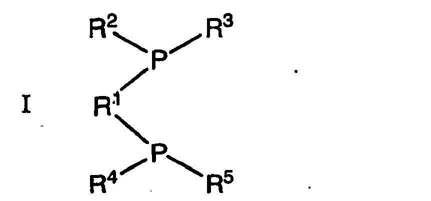 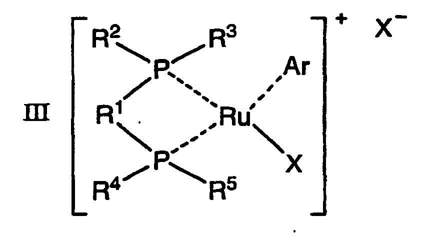
(b) removing the first solvent from the intermediate mixture to produce an intermediate solid comprising the diphosphine-ruthenium compound of formula III;
(c) contacting the intermediate solid comprising the diphosphine-ruthenium compound of formula III with a diamine of formula IV and a second solvent to produce a diphosphine-ruthenium-diamine complex of formula V, the second solvent consisting essentially of an aprotic solvent selected from the group consisting of ethers and hydrocarbon solvents, 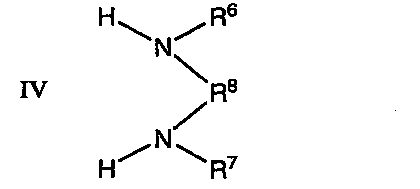 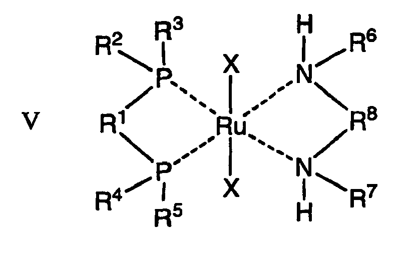
where R¹, R², R³, R⁴, R⁵, R⁶, R⁷and R⁸ are each independently an alkyl, aryl or alkaryl group comprised of carbon, hydrogen and optionally heteroatom(s), where Ar is an aryl group comprised of carbon, hydrogen and optionally heteroatom(s) and where X is a halide or carboxylate or wherein any of R¹, R², R³, R⁴ and R⁵ are linked to form cyclic chiral phosphines, or R¹ can incorporate a metallocene.

2. The process of Claim 1, wherein the compound of formula I is a bis-tertiary phosphine in which the two phosphorus atoms are linked by a C₂₋₇ carbon chain such that they form a 5-10 membered ring with the Ru atom of the compound of formula III, wherein the compound of formula IV is a chelating diamine with any aromatic, alkaryl, alkyl, heteroatom or hydrogen substituent on the carbon backbone linking the nitrogen atoms and wherein X is chloride.

3. The process of Claim 1, wherein the aprotic solvent of the first solvent mixture consists essentially of an ether and/or a chlorinated solvent and wherein the protic solvent of the first solvent mixture consists essentially of an alcohol.

4. The process of Claim 2, wherein the aprotic solvent of the first solvent mixture consists essentially of an ether and/or a chlorinated solvent and wherein the protic solvent of the first solvent mixture consists essentially of an alcohol.

5. The process of Claim 1, wherein the aprotic solvent of the first solvent mixture is selected from the group consisting of diethyl ether, tetrahydrofuran, dimethyl ether, methyl-tetrahydrofuran, diisopropyl ether, methyl tert-butyl ether, di-n-butyl ether, dichloromethane and mixtures thereof and the protic solvent of the first solvent mixture is selected from the group consisting of methanol, ethanol, isopropanol, butanol and mixtures thereof.

6. The process of Claim 2, wherein the aprotic solvent of the first solvent mixture is selected from the group consisting of diethyl ether, tetrahydrofuran, dimethyl ether, methyl-tetrahydrofuran, diisopropyl ether, methyl tert-butyl ether, di-n-butyl ether, dichloromethane and mixtures thereof and the protic solvent of the first solvent mixture is selected from the group consisting of methanol, ethanol, isopropanol, butanol and mixtures thereof.

7. The process of Claim 1, wherein the second solvent is selected from the group consisting of tetrahydrofuran, diethyl ether, methyl-tetrahydrofuran, diisopropyl ether, methyl tert-butyl ether, di-n-butyl ether and mixtures thereof.

8. The process of Claim 2, wherein the second solvent is selected from the group consisting of tetrahydrofuran, diethyl ether, methyl-tetrahydrofuran, diisopropyl ether, methyl tert-butyl ether, di-n-butyl ether and mixtures thereof.

9. The process of Claim 3, wherein the second solvent is selected from the group consisting of tetrahydrofuran, diethyl ether, methyl-tetrahydrofuran, diisopropyl ether, methyl tert-butyl ether, di-n-butyl ether and mixtures thereof.

10. The process of Claim 4, wherein the second solvent is selected from the group consisting of tetrahydrofuran, diethyl ether, methyl-tetrahydrofuran, diisopropyl ether, methyl tert-butyl ether, di-n-butyl ether and mixtures thereof.

11. The process of Claim 5, wherein the second solvent is selected from the group consisting of tetrahydrofuran, diethyl ether, methyl-tetrahydrofuran, diisopropyl ether, methyl tert-butyl ether, di-n-butyl ether and mixtures thereof.

12. The process of Claim 6, wherein the second solvent is selected from the group consisting of tetrahydrofuran, diethyl ether, methyl-tetrahydrofuran, diisopropyl ether, methyl tert-butyl ether, di-n-butyl ether and mixtures thereof.

13. The process of any of Claims 1-12, wherein the diamine is a a vicinal diamine with any aromatic, alkaryl, alkyl, heteroatom or hydrogen substituent on the carbon backbone linking the nitrogen atoms.

14. The process of Claim 13, wherein the vicinal diamine is 1,2-diphenylethylene diamine (OPEN) or *trans*-1,2-diaminocyclohexane (DACH).

15. The process of any of Claims 1-12, wherein the diamine is an amine substituted pyridine.

16. The process of any of Claims 1-15, wherein the arene ruthenium compound is a monomeric or oligomeric Ru(II) complex in which each ruthenium atom is pi-bonded to a carbocyclic or heterocyclic arene.

17. The process of Claim 16, wherein the arene ruthenium compound is one in which the arene is a benzene, optionally forming part of a fused carbocyclic or heterocyclic ring system, and optionally bearing one or more substituents selected from the group comprising alkyl, alkenyl, alkynyl, aryl, halogen, alkoxy, acyloxy, silyloxy, amino, amido, carboxylic acid or ester, keto, or sulphonamide.

18. The process of Claim 16, wherein the arene of the arene ruthenium compound is benzene or p-cymene.

19. The process of Claim 16, wherein the arene ruthenium compound is a dimeric complex of formula II.
II [ArRuX₂]₂

20. The process of Claim 19, wherein the arene ruthenium compound is [(p-cymene)RuCl₂]₂.

## Patentansprüche

1. Verfahren zur Herstellung von Diphosphin-Ruthenium-Diamin-Komplexen, mit den folgenden Schritten:
(a) Inkontaktbringen einer Phosphinverbindung der Formel I mit einer Arenrutheniumverbindung in einem ersten Lösungsmittel, um eine Zwischenmischung herzustellen, die eine Diphosphin-Ruthenium-Verbindung der Formel III umfasst, wobei das erste Lösungsmittel im Wesentlichen aus einer Mischung eines aprotischen Lösungsmittels und eines protischen Lösungsmittels besteht; 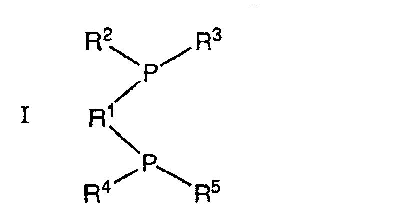 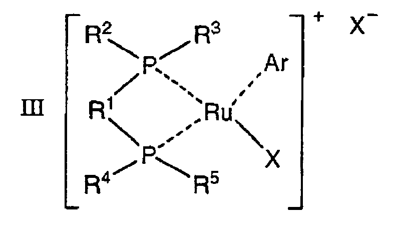
(b) Entfernen des ersten Lösungsmittels aus der Zwischenmischung, um einen intermediären Feststoff herzustellen, der die Diphosphin-Ruthenium-Verbindung der Formel III umfasst;
(c) Inkontaktbringen des die Diphosphin-Ruthenium-Verbindung der Formel III umfassenden intermediären Feststoffs mit einem Diamin der Formel IV und einem zweiten Lösungsmittel, um einen Diphosphin-Ruthenium-Diamin-Komplex der Formel V herzustellen, wobei das zweite Lösungsmittel im Wesentlichen aus einem aprotischen Lösungsmittel besteht, das aus der aus Ethern und Kohlenwasserstofflösungsmitteln bestehenden Gruppe ausgewählt ist, 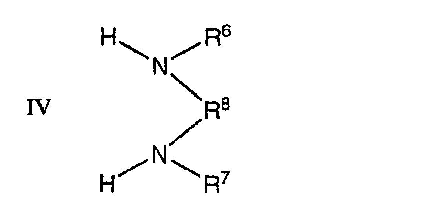 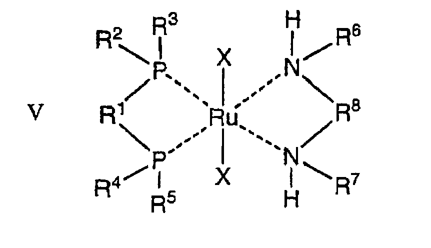
wo R¹, R², R³, R⁴, R⁵, R⁶, R⁷ und R⁸ jeweils unabhängig voneinander eine aus Kohlenstoff-, Wasserstoff- und optional Heteroatom(en) bestehende Alkyl-, Aryl-oder Alkarylgruppe sind, wo Ar eine aus Kohlenstoff-, Wasserstoff- und optional Heteroatom(en) bestehende Arylgruppe ist, und wo X ein Halogenid oder Carboxylat ist oder wobei R¹, R², R³, R⁴ und R⁵ jeweils zu cyclischen chiralen Phosphinen verbunden sind oder R¹ ein Metallocen einschließen kann.

2. Verfahren nach Anspruch 1, wobei die Verbindung der Formel I ein bistertiäres Phosphin ist, bei dem die zwei Phosphoratome durch eine C₂₋₇-Kohlenstoffkette verbunden sind, so dass sie mit dem Ru-Atom der Verbindung der Formel III einen 5-10-gliedrigen Ring bilden, wobei die Verbindung der Formel IV ein chelatbildendes Diamin mit einem die Stickstoffatome verbindenden Aromaten, Alkaryl, Alkyl, Heteroatom oder Wasserstoffsubstituenten an der Kohlenstoffhauptkette ist, und wobei X Chlorid ist.

3. Verfahren nach Anspruch 1, wobei das aprotische Lösungsmittel der ersten Lösungsmittelmischung im Wesentlichen aus einem Ether und/oder einem chlorierten Lösungsmittel besteht und wobei das protische Lösungsmittel der ersten Lösungsmittelmischung im Wesentlichen aus einem Alkohol besteht.

4. Verfahren nach Anspruch 2, wobei das aprotische Lösungsmittel der ersten Lösungsmittelmischung im Wesentlichen aus einem Ether und/oder einem chlorierten Lösungsmittel besteht und wobei das protische Lösungsmittel der ersten Lösungsmittelmischung im Wesentlichen aus einem Alkohol besteht.

5. Verfahren nach Anspruch 1, wobei das aprotische Lösungsmittel der ersten Lösungsmittelmischung aus der aus Diethylether, Tetrahydrofuran, Dimethylether, Methyltetrahydrofuran, Diisopropylether, tert-Butylmethylether, Di-n-butylether, Dichlormethan und Mischungen davon bestehenden Gruppe ausgewählt ist und das protische Lösungsmittel der ersten Lösungsmittelmischung aus der aus Methanol, Ethanol, Isopropanol, Butanol und Mischungen davon bestehenden Gruppe ausgewählt ist.

6. Verfahren nach Anspruch 2, wobei das aprotische Lösungsmittel der ersten Lösungsmittelmischung aus der aus Diethylether, Tetrahydrofuran, Dimethylether, Methyltetrahydrofuran, Diisopropylether, tert-Butylmethylether, Di-n-butylether, Dichlormethan und Mischungen davon bestehenden Gruppe ausgewählt ist und das protische Lösungsmittel der ersten Lösungsmittelmischung aus der aus Methanol, Ethanol, Isopropanol, Butanol und Mischungen davon bestehenden Gruppe ausgewählt ist.

7. Verfahren nach Anspruch 1, wobei das zweite Lösungsmittel aus der aus Tetrahydrofuran, Diethylether, Methyltetrahydrofuran, Diisopropylether, tert-Butylmethylether, Di-n-butylether und Mischungen davon bestehenden Gruppe ausgewählt ist.

8. Verfahren nach Anspruch 2, wobei das zweite Lösungsmittel aus der aus Tetrahydrofuran, Diethylether, Methyltetrahydrofuran, Diisopropylether, tert-Butylmethylether, Di-n-butylether und Mischungen davon bestehenden Gruppe ausgewählt ist.

9. Verfahren nach Anspruch 3, wobei das zweite Lösungsmittel aus der aus Tetrahydrofuran, Diethylether, Methyltetrahydrofuran, Diisopropylether, tert-Butylmethylether, Di-n-butylether und Mischungen davon bestehenden Gruppe ausgewählt ist.

10. Verfahren nach Anspruch 4, wobei das zweite Lösungsmittel aus der aus Tetrahydrofuran, Diethylether, Methyltetrahydrofuran, Diisopropylether, tert-Butylmethylether, Di-n-butylether und Mischungen davon bestehenden Gruppe ausgewählt ist.

11. Verfahren nach Anspruch 5, wobei das zweite Lösungsmittel aus der aus Tetrahydrofuran, Diethylether, Methyltetrahydrofuran, Diisopropylether, tert-Butylmethylether, Di-n-butylether und Mischungen davon bestehenden Gruppe ausgewählt ist.

12. Verfahren nach Anspruch 6, wobei das zweite Lösungsmittel aus der aus Tetrahydrofuran, Diethylether, Methyltetrahydrofuran, Diisopropylether, tert-Butylmethylether, Di-n-butylether und Mischungen davon bestehenden Gruppe ausgewählt ist.

13. Verfahren nach einem der Ansprüche 1-12, wobei das Diamin ein vizinales Diamin mit einem die Stickstoffatome verbindenden Aromaten, Alkaryl, Alkyl, Heteroatom oder Wasserstoffsubstituenten an der Kohlenstoffhauptkette ist.

14. Verfahren nach Anspruch 13, wobei das vizinale Diamin 1,2-Diphenylethylendiamin (DPEN) oder *trans*-1,2-Diaminocyclohexan (DACH) ist.

15. Verfahren nach einem der Ansprüche 1-12, wobei das Diamin ein aminsubstituiertes Pyridin ist.

16. Verfahren nach einem der Ansprüche 1-15, wobei die Arenrutheniumverbindung ein monomerer oder oligomerer Ru(II)-Komplex ist, bei dem jedes Ruthenium an ein carbocyclisches oder heterocyclisches Aren pigebunden ist.

17. Verfahren nach Anspruch 16, wobei die Arenrutheniumverbindung eine Verbindung ist, bei der das Aren ein Benzol ist, optional Bestandteil eines carbocyclischen oder heterocyclischen kondensierten Ringsystems ist und optional ein oder mehr Substituenten trägt, die aus der Alkyl, Alkenyl, Alkynyl, Aryl, Halogen, Alkoxy, Acyloxy, Silyloxy, Amino, Amido, Carbonsäure oder Ester, Keto oder Sulfonamid umfassenden Gruppe ausgewählt sind.

18. Verfahren nach Anspruch 16, wobei das Aren der Arenrutheniumverbindung Benzol oder p-Cymol ist.

19. Verfahren nach Anspruch 16, wobei die Arenrutheniumverbindung ein dimerer Komplex der Formel II ist.
II [ArRuX₂]₂

20. Verfahren nach Anspruch 19, wobei die Arenrutheniumverbindung [(p-Cymol)RuCl₂]₂ ist.

## Revendications

1. Procédé de préparation de complexes de type diphosphine-diamine-ruthénium, qui comporte les étapes suivantes :
a) mettre une phosphine de formule I en contact avec un composé de type arène-ruthénium, dans un premier solvant, de manière à produire un mélange intermédiaire comprenant un composé de type diphosphine-ruthénium de formule III, lequel premier solvant est essentiellement constitué d'un mélange d'un solvant aprotique et d'un solvant protique ; 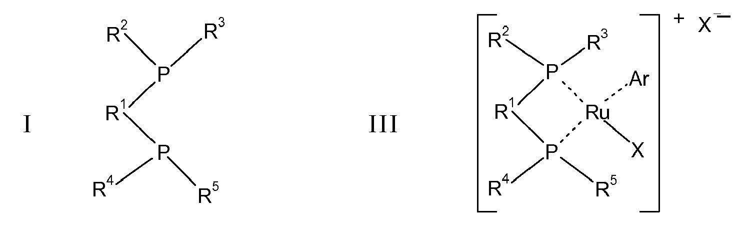
b) chasser le premier solvant de ce mélange intermédiaire, de manière à produire un solide intermédiaire comprenant le composé de type diphosphine-ruthénium de formule III ;
c) mettre ce solide intermédiaire comprenant le composé de type diphosphine-ruthénium de formule III en contact avec une diamine de formule IV et un deuxième solvant, de manière à produire un complexe de type diphosphine-diamine-ruthénium de formule V, lequel deuxième solvant est essentiellement constitué d'un solvant aprotique choisi parmi les solvants de types éther et hydrocarbure ; 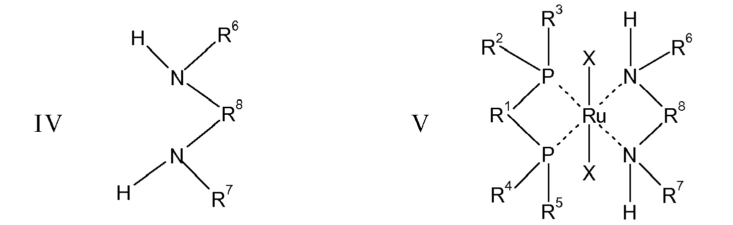
dans ces formules, R¹, R², R³, R⁴, R⁵, R⁶, R⁷et R⁸ représentent chacun, indépendamment, un groupe alkyle, aryle ou alkyl-aryle, constitué d'atomes de carbone et d'hydrogène et, en option, d'un ou de plusieurs hétéroatome(s), Ar représente un groupe aryle constitué d'atomes de carbone et d'hydrogène et, en option, d'un ou de plusieurs hétéroatome(s), et X représente une entité de type halogénure ou carboxylate, étant entendu que n'importe lesquels des symboles R¹, R², R³, R⁴ et R⁵ peuvent représenter des entités qui sont combinées de manière à constituer une phosphine chirale cyclique, et que l'entité représentée par R¹ peut comprendre un fragment de type métallocène.

2. Procédé conforme à la revendication 1, dans lequel le composé de formule I est une bis-phosphine tertiaire dans laquelle les deux atomes de phosphore sont reliés par une chaîne carbonée en C₂₋₇, de sorte qu'ils constituent avec l'atome de ruthénium, dans le composé de formule III, un cycle de 5 à 10 chaînons, et dans lequel procédé le composé de formule IV est une diamine chélatante qui comporte, sur son squelette carboné reliant les atomes d'azote, n'importe quel substituant aromatique, alkyl-aryle, alkyle ou hétéroatomique ou uniquement des atomes d'hydrogène, et X représente un atome de chlore.

3. Procédé conforme à la revendication 1, dans lequel le solvant aprotique du mélange formant le premier solvant est essentiellement constitué d'un éther et/ou d'un solvant chloré, et le solvant protique du mélange formant le premier solvant est essentiellement constitué d'un alcool.

4. Procédé conforme à la revendication 2, dans lequel le solvant aprotique du mélange formant le premier solvant est essentiellement constitué d'un éther et/ou d'un solvant chloré, et le solvant protique du mélange formant le premier solvant est essentiellement constitué d'un alcool.

5. Procédé conforme à la revendication 1, dans lequel le solvant aprotique du mélange formant le premier solvant est choisi dans l'ensemble formé par les diéthyl-éther, tétrahydrofurane, diméthyl-éther, méthyl-tétrahydrofurane, diisopropyl-éther, méthyl-tertiobutyl-éther, di-n-butyl-éther, et dichlorométhane, ainsi que leurs mélanges, et le solvant protique du mélange formant le premier solvant est choisi dans l'ensemble formé par les méthanol, éthanol, isopropanol et butanol, ainsi que leurs mélanges.

6. Procédé conforme à la revendication 2, dans lequel le solvant aprotique du mélange formant le premier solvant est choisi dans l'ensemble formé par les diéthyl-éther, tétrahydrofurane, diméthyl-éther, méthyl-tétrahydrofurane, diisopropyl-éther, méthyl-tertiobutyl-éther, di-n-butyl-éther, et dichlorométhane, ainsi que leurs mélanges, et le solvant protique du mélange formant le premier solvant est choisi dans l'ensemble formé par les méthanol, éthanol, isopropanol et butanol, ainsi que leurs mélanges.

7. Procédé conforme à la revendication 1, dans lequel le deuxième solvant est choisi dans l'ensemble formé par les tétrahydrofurane, diéthyl-éther, méthyl-tétrahydrofurane, diisopropyl-éther, méthyl-tertiobutyl-éther, di-n-butyl-éther, ainsi que leurs mélanges.

8. Procédé conforme à la revendication 2, dans lequel le deuxième solvant est choisi dans l'ensemble formé par les tétrahydrofurane, diéthyl-éther, méthyl-tétrahydrofurane, diisopropyl-éther, méthyl-tertiobutyl-éther, di-n-butyl-éther, ainsi que leurs mélanges.

9. Procédé conforme à la revendication 3, dans lequel le deuxième solvant est choisi dans l'ensemble formé par les tétrahydrofurane, diéthyl-éther, méthyl-tétrahydrofurane, diisopropyl-éther, méthyl-tertiobutyl-éther, di-n-butyl-éther, ainsi que leurs mélanges.

10. Procédé conforme à la revendication 4, dans lequel le deuxième solvant est choisi dans l'ensemble formé par les tétrahydrofurane, diéthyl-éther, méthyl-tétrahydrofurane, diisopropyl-éther, méthyl-tertiobutyl-éther, di-n-butyl-éther, ainsi que leurs mélanges.

11. Procédé conforme à la revendication 5, dans lequel le deuxième solvant est choisi dans l'ensemble formé par les tétrahydrofurane, diéthyl-éther, méthyl-tétrahydrofurane, diisopropyl-éther, méthyl-tertiobutyl-éther, di-n-butyl-éther, ainsi que leurs mélanges.

12. Procédé conforme à la revendication 6, dans lequel le deuxième solvant est choisi dans l'ensemble formé par les tétrahydrofurane, diéthyl-éther, méthyl-tétrahydrofurane, diisopropyl-éther, méthyl-tertiobutyl-éther, di-n-butyl-éther, ainsi que leurs mélanges.

13. Procédé conforme à l'une des revendications 1 à 12, dans lequel la diamine est une diamine vicinale qui comporte, sur son squelette carboné reliant les atomes d'azote, n'importe quel substituant aromatique, alkyl-aryle, alkyle ou hétéroatomique ou uniquement des atomes d'hydrogène.

14. Procédé conforme à la revendication 13, dans lequel la diamine vicinale est de la 1,2-diphényl-éthylène-diamine (DPEN) ou du trans-1,2-diamino-cyclohexane (DACH).

15. Procédé conforme à l'une des revendications 1 à 12, dans lequel la diamine est une pyridine à substituant amino.

16. Procédé conforme à l'une des revendications 1 à 15, dans lequel le composé de type arène-ruthénium est un complexe monomère ou oligomère de ruthénium-(II) dans lequel chaque atome de ruthénium est π-lié à un arène carbocyclique ou hétérocyclique.

17. Procédé conforme à la revendication 16, dans lequel, dans le composé de type arène-ruthénium, le fragment arène est un cycle benzène, qui peut, en option, faire partie d'un système carbocyclique ou hétérocyclique à cycles condensés, et qui peut, en option, porter un ou plusieurs substituant(s) choisi(s) dans l'ensemble formé par les atomes d'halogène, les groupes alkyle, alcényle, alcynyle, aryle, alcoxy, acyloxy, silyloxy, amino, amido, carboxyle et sulfonamido, et les groupes de type ester carboxylate ou cétone.

18. Procédé conforme à la revendication 16, dans lequel, dans le composé de type arène-ruthénium, le fragment arène est un cycle benzène ou para-cymène.

19. Procédé conforme à la revendication 16, dans lequel le composé de type arène-ruthénium est un complexe dimère de formule II :
[ArRuX₂]₂ II

20. Procédé conforme à la revendication 19, dans lequel le composé de type arène-ruthénium est le composé de formule :
[(p-cymène)RuCl₂]₂.
